(19) Europäisches Patentamt
European Patent Office
Office européen des brevets

(11) **EP 3 267 176 A1**

(12) **EUROPEAN PATENT APPLICATION**

(43) Date of publication:
**10.01.2018 Bulletin 2018/02**

(51) Int Cl.:
***G01N 3/46*** *(2006.01)*

(21) Application number: **16178524.1**

(22) Date of filing: **08.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Anton Paar TriTec SA
2034 Peseux (CH)**

(72) Inventors:
• **COUDERT, Pierre-Jean
F-25370 Metabief (FR)**

• **RANDALL, Nicholas
CH-2000 Neuchâtel (CH)**
• **FAVARO, Gregory
CH-1321 Arnex-sur-Orbe (CH)**
• **BELLATON, Bertrand
CH-2000 Neuchâtel (CH)**

(74) Representative: **e-Patent SA
Rue Saint-Honoré 1
Boîte Postale CP 2510
2001 Neuchâtel (CH)**

(54) **METHODS FOR SURFACE EVALUATION**

(57)     Method of evaluation a performance of a surface of a material, the method comprising steps of:
- measuring a first surface profile (Pf) of a material sample (5) along a predetermined track (6) by bringing a tip (9a) of a stylus (9) into contact with a surface of the sample (5) and traversing said tip (9a) across the surface of the sample (5) in a direction tangential to the tip (9a) of the stylus (9) while recording said first surface profile (Pf), subsequently;
- applying a normal force (Fn) to the surface of the sample (5) with the stylus (9), said normal force (Fn) being in a direction substantially perpendicular to the surface of the sample (5), subsequently;
- moving said tip (9a) across the surface of the sample (5) following at least part of said predetermined track (6) while applying said normal force (Fn), subsequently;
- measuring a second surface profile of said sample along at least part of said predetermined track (6) by bringing said tip (9a) into contact with the surface of the sample (5) and traversing said tip (9a) across the surface of the sample (5) along said track (6) while recording said second surface profile,
- calculating a first residual depth profile (Rd) as a difference of said first surface profile (Pf) and said second surface profile.

According an aspect of the invention, the method comprises a step of
- determining a failure point (CP1; CP2) of the surface of the sample (5) by identifying when at least one value of a function of said first residual depth profile (Rd) deviates from an expected magnitude value by at least a predetermined amount.

Figure 1

Printed by Jouve, 75001 PARIS (FR)

## Description

## Technical field

The present invention relates to the field of evaluation of surfaces of materials, particularly but not exclusively to surfaces provided with a coating.

## Background art

It is commonly known to evaluate the surface properties of a material sample by means of a so-called scratch test. This test involves providing a prepared material specimen in a materials testing device, and scratching a stylus along the surface of the sample, typically under a linearly-increasing load applied substantially orthogonal to the surface of the sample. During this scratching, various parameters are measured, such as applied load, displacement parallel to the surface of the sample, displacement of the stylus into the surface of the sample, acoustic emissions, and tangential force applied to the stylus by the sample.

In a common ramped-load scratch test of a sample provided with a coating which is harder than the substrate, typically both the underlying substrate and the coating first deform elastically, then the substrate deforms plastically while the coating remains in its elastic regime, and then the coating will deform plastically and/or fracture, leading to spalling. During the second of these regimes, the adhesion of the coating to the substrate is an aspect that can be examined upon relaxation of the sample and of the coating after passage of the stylus.

These parameters are graphed, and various material properties such as bulk modulus, elastic modulus, coefficient of friction etc., can be directly determined from the various parameters. Furthermore, so called "critical failure points" at which a failure (such as cracking, spalling or delamination of a coating occurs) can be determined based on changes in these parameters. For instance, when a hard surface coating starts to spall, the acoustic emissions may increase significantly. By looking at the various measured parameters at the critical points, useful information can be gathered about the behaviour of the sample.

Identification of the critical points by means of analysing the conventional parameters of acoustic emission and calculated coefficient of friction is difficult, and requires a skilled interpreter of the data.

The document EP 2 291 635 attempts to improve on this by determining the critical points corresponding to fracture points of the sample by identifying when at least one measured value of the tangential force applied between the stylus and the surface of the substrate as a result of the former being scratched along the latter under a normal load exceeds a threshold value.

However, whereas use of this parameter does improve the results over and above simply looking at acoustic emission and coefficient of friction, it still is not satisfactory, since it does not easily permit identification of the very start of coating separation in certain substrate-coating systems. Furthermore, prior art methods are deficient in respect of the accuracy of measurement of certain other properties such as elastic modulus.

## Disclosure of the invention

An object of the invention is thus to improve on the above-mentioned methods of surface evaluation, and thereby to be able to improve detection of critical failure points and to improve measurement of certain material properties.

To this end, according to a first aspect, the invention relates to a method of evaluation of a performance of a surface of a material. This method comprises, after provision of a suitable sample in a suitable scratch testing apparatus adapted to carry out the method, a first step of measuring a first surface profile of a material sample along a predetermined track or pathway by bringing a tip of a stylus into contact with a surface of the sample and traversing said tip across the surface of the sample in a direction tangential to the tip of the stylus while recording said first surface profile, e.g. by maintaining the tip of the stylus in contact with the surface of the sample under a constant force insufficient to substantially deform the surface while recording output from various sensors functionally related to the stylus. This is commonly known as a "pre scan", and produces data corresponding to the surface profile of the sample.

Subsequently, a normal force is applied to the surface of the sample with the stylus, said normal force being in a direction substantially perpendicular to the surface of the sample. This normal force is typically parallel to the axis of the stylus, and substantially perpendicular to the surface of the substrate, as far as practical tolerances allow. This force may be predetermined, or may be applied in function of a desired scratch depth profile to be followed by the tip of the stylus (a so-called "depth-controlled scratch").

Subsequently, the stylus is moved across the surface of the sample following at least part of said predetermined track while applying said normal force, so as to carry out a scratch test.

Subsequently, a second surface profile of said sample is measured along at least part of said predetermined track by bringing said tip into contact with the surface of the sample and traversing said tip across the surface of the sample along said track while recording said second surface profile, similarly as to the above-mentioned step for generating the first surface profile.

Subsequently, a first residual depth profile is calculated as a difference of said first surface profile and said second surface profile.

According to the invention, at least one failure point of the surface of the material sample is determined by identifying when at least one value of a function of said first residual depth profile deviates from an expected magnitude value by at least a predetermined amount. This function may for instance be a first differential, a departure from a linear trend line, or any other convenient function. This determination can be carried out automatically or by an operator.

As a result, as will be demonstrated below, the accuracy of determination of the position of one or more failure points can be determined with greater precision and for a wider range of sample types than is possible with prior art methods.

Advantageously, the normal force can be varied as a cyclical function, such as a sinusoidal wave, a triangular wave, a saw-toothed wave, or similar.

Advantageously, the method can further comprise subsequent steps of measuring a third surface profile of said sample along said predetermined track by bringing said tip into contact with the surface of the sample and traversing said tip across the surface of the sample along said track while recording said third surface profile, said third surface profile being measured at a predetermined time after said second profile.

Subsequently, a second residual depth profile is determined as a difference of said first surface profile and said second surface profile, and then a viscoelastic behaviour (i.e. a time-dependent recovery) of the surface of the sample is determined based on said first residual depth profile and said second residual depth profile.

Advantageously, the energy lost at said failure point can be determined based on said first surface profile and said residual depth profile.

Advantageously, the method can comprise a step of determining a value of elastic modulus based on a penetration depth profile determined during scratching, and said residual depth profile.

Advantageously, the sample can comprise a substrate and a coating provided thereupon, the method further comprising a step of determining adhesion of said coating to said substrate based on said first residual depth profile.

According to a further aspect of the invention, the invention equally relates to method of evaluation of a performance of a surface of a material. This method comprises, after provision of a suitable sample in a suitable scratch testing apparatus adapted to carry out the method, a first step of measuring a first surface profile of a material sample along a predetermined track or pathway by bringing a tip of a stylus into contact with a surface of the sample and traversing said tip across the surface of the sample in a direction tangential to the tip of the stylus while recording said first surface profile, e.g. by maintaining the tip of the stylus in contact with the surface of the sample under a constant force insufficient to substantially deform the surface while recording output from various sensors functionally related to the stylus. This is commonly known as a "pre scan", and produces data corresponding to the surface profile of the sample.

Subsequently, a normal force is applied to the surface of the sample with the stylus, said normal force being in a direction substantially perpendicular to the surface of the sample. This normal force is typically parallel to the axis of the stylus, and substantially perpendicular to the surface of the substrate, as far as practical tolerances allow. This force may be predetermined, or may be applied in function of a desired scratch depth profile to be followed by the tip of the stylus (a so-called "depth-controlled scratch").

Subsequently, the stylus is moved across the surface of the sample following at least part of said predetermined track while applying said normal force, so as to carry out a scratch test.

Subsequently, a second surface profile of said sample is measured along at least part of said predetermined track by bringing said tip into contact with the surface of the sample and traversing said tip across the surface of the sample along said track while recording said second surface profile, similarly as to the above-mentioned step for generating the first surface profile.

Subsequently, a first residual depth profile is calculated as a difference of said first surface profile and said second surface profile.

According to the invention, after a predetermined period of time, a third surface profile of said sample is measured along at least part of said predetermined track by bringing said tip into contact with a surface of the sample and traversing said tip across the surface of the sample along said track while recording said third surface profile. Subsequently, a second residual depth profile is calculated as a difference of said first surface profile and said third surface profile, and at least one parameter of a viscoelastic behaviour (such as time-dependent relaxation) of the material of the sample is determined based on a function of said first residual depth profile and said second residual depth profile.

As a result, the time-dependent relaxation of a sample can be simply and efficiently determined.

According to a yet further aspect of the invention, the invention equally relates to method of evaluation a performance of a surface of a material. This method comprises, after provision of a suitable sample in a suitable scratch testing apparatus adapted to carry out the method, a first step of measuring a first surface profile of a material sample along a predetermined track or pathway by bringing a tip of a stylus into contact with a surface of the sample and traversing said tip across the surface of the sample in a direction tangential to the tip of the stylus while recording said first surface profile, e.g. by maintaining the tip of the stylus in contact with the surface of the sample under a constant force insufficient to substantially deform the surface while recording output from various sensors functionally related to the stylus. This is commonly known as a "pre scan", and produces data corresponding to the surface profile of the sample.

Subsequently, a normal force is applied to the surface of the sample with the stylus, said normal force being in a direction substantially perpendicular to the surface of the sample. This normal force is typically parallel to the axis of the stylus, and substantially perpendicular to the surface of the substrate, as far as practical tolerances allow. This force may be predetermined, or may be applied in function of a desired scratch depth profile to be followed by the tip of the stylus (a so-called "depth-controlled scratch").

Subsequently, the stylus is moved across the surface of the sample following at least part of said predetermined track while applying said normal force and while measuring the penetration depth of the tip into the surface of the sample, so as to carry out a scratch test while measuring a penetration depth profile. The penetration depth profile takes into account the first surface profile so as to compensate for any slant or irregularities in the surface of the sample.

Subsequently, a second surface profile of said sample is measured along at least part of said predetermined track by bringing said tip into contact with the surface of the sample and traversing said tip across the surface of the sample along said track while recording said second surface profile, similarly as to the above-mentioned step for generating the first surface profile.

Subsequently, a first residual depth profile is calculated as a difference of said first surface profile and said second surface profile.

According to the invention, a value of elastic modulus is then calculated based on a difference between said penetration depth and said first residual depth profile.

As a result, elastic modulus can be accurately and repeatably measured. The normal force can for example vary linearly, cyclically, as a step function (i.e. an incremental loading), or in function of a predetermined depth profile.

The invention also relates to a scratch test apparatus adapted to carry out any of the methods described above, and to a computer program product directly loadable into the internal memory of a digital computer comprising software code portions for causing a scratch testing apparatus to perform the steps of any of the methods described above when said product is run on a computer controlling said scratch test apparatus.

**Brief description of the drawings**

The invention will be further explained in the context of the following figures, which illustrate:

- Figure 1: a schematic diagram of a scratch testing apparatus;
- Figure 2: a schematic flow diagram of a method according to the invention;
- Figures 3 and 4: graphs of scratch test data illustrating the functioning of the method of the invention;
- Figure 5: a schematic flow diagram of a further embodiment of a method according to the invention;
- Figure 6: a schematic flow diagram of a further embodiment of a method according to the invention; and

- Figure 7: a graph of scratch test data illustrating calculating an elastic modulus of a sample based on the method of figure 6.

**Mode(s) for carrying out the invention**

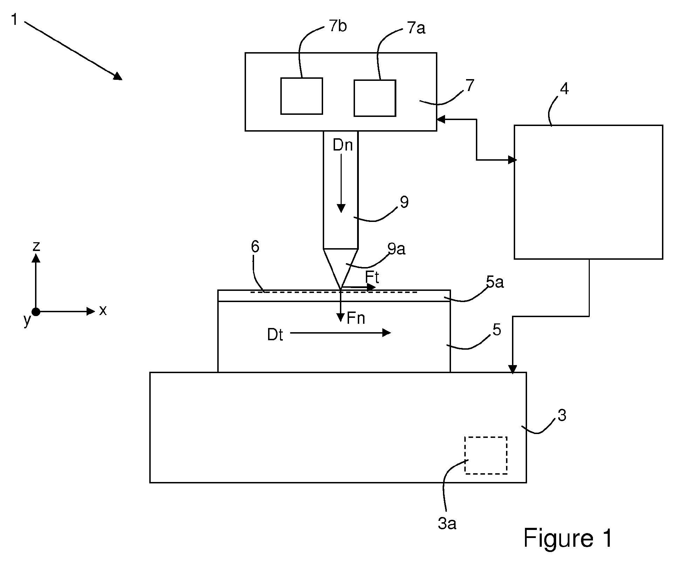

Figure 1 shows schematically a scratch testing apparatus 1. As is commonly known, this apparatus 1 comprises a sample holder 3 upon which a sample 5 can be fixed, e.g. by clamping, bolting or similar. Sample 5 may optionally comprise a coating 5a. Sample holder 3 is typically displaceable in at least one direction in the plane XY of the sample (the Y direction being into the page), and normally also perpendicular thereto, i.e. according to the Z direction, by means of suitable actuators (not illustrated) as generally known.

The apparatus 1 also comprises a headstock 7, supporting a stylus 9. A distal end of the stylus 9 comprises a tip 9a facing the sample holder 3 and hence equally facing the sample 5. The tip 9a may be of any know shape (e.g. conical, hemispherical, pyramidal...) and of any convenient material (e.g. steel, diamond, alumina...), depending on the material of the surface of the sample to be tested.

Headstock 7 comprises various actuators 7a and sensors 7b, for applying and measuring normal force Fn (in the Z direction), tangential force Ft (in at least one direction in the XY plane, if desired), and displacement Dn normal to the surface of the sample 5, as is generally known. Alternatively, or additionally, sensors 3a for one or more forces and/or displacements may be comprised within the sample holder 3 and/or within a structure (not illustrated) which supports this latter.

The stylus 9 can be displaced with respect to the sample 5 by means of any combination of moving sample holder 3 and/or the headstock 7 and/or moving the stylus 9 with respect to the headstock 5, as is generally known.

A controller 4 controls all displacements and actuators, and receives all measurements from the sensors 7b, as is generally known. Controller 4 may for instance be a dedicated control unit comprising a dedicated computer integrated therein, or may be a general purpose programmable computer adapted to control the scratch testing apparatus 1.

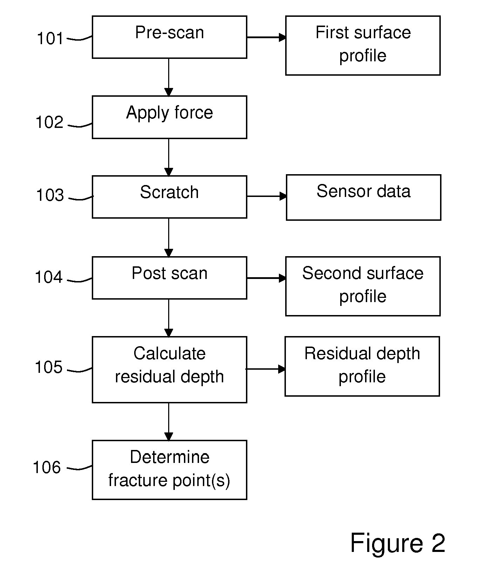

According to an aspect of the present invention, the scratch testing apparatus is adapted to carry the method of figure 2.

This method incorporates the following steps.

After provision of a suitable scratch testing apparatus 1 and an appropriate sample 5 upon the sample holder 3 such that the upper face of the sample 5 is substantially situated in the XY plane, in step 101 a so-called "pre-scan" is carried out. It should be noted that it is very difficult to ensure that the upper face of the sample is in the XY plane to nanometre precision, and hence a tolerance of for instance $\pm 1$ $\mu$m??? per mm of scratch length (i.e. 1 %) of slope along the predetermined track 6 is acceptable. As a general rule, "perpendicular", "normal" and "parallel" should be understood as incorporating a tolerance of 1% as mentioned above.

The pre-scan involves measuring a first surface profile by bringing the tip 9a of the stylus 9 into contact with the surface of the sample 5 and tracking it along the surface along a predetermined track 6 while recording the first surface profile based on output from the various sensors 3a and/or 7b. This is carried out while applying insufficient force to substantially deform the surface. The exact amount of force required to measure the first surface profile without substantially deforming the surface depends on the material of the sample. The predetermined track 6 is typically a straight line of several millimetres length, although other shapes are possible. Furthermore, the predetermined track 6 may be as long as desired.

The first surface profile can thus be determined based on the output of the sensors 7b, particularly a sensor providing information relating to the Z-axis (the "height" axis).

In step 102, the tip 9a of the stylus 9 is positioned at a desired point along the predetermined track 6, and a normal force Fn is applied, i.e. a force substantially parallel to the Z-axis. It should be noted that the axial force can be predetermined, i.e. follow a desired development, or the normal force can be a dependent variable in dependence of a desired penetration depth of the tip 9a into the surface of the sample 5. For instance, it may be desired to cause the scratch to extend to a fixed depth or to a predetermined depth profile (ramp, waveform...), which can be determined based on the first surface profile.

In step 103, the tip 9a is "scratched" along the predetermined track 6, as is generally known, while sensor data is collected from the various sensors 7a in the headstock 7 and/or in the sample holder 3 so as to output normal force, tangential force (if measured), displacement of the stylus 9 in the Z direction and hence parallel to the longitudinal axis of the stylus 9, and so on. During this step, the applied force may remain constant, or may be varied. In a classic scratch test, the normal force Fn is ramped linearly. However, normal force Fn may be varied in any other convenient manner. To this effect, it may follow a cyclical pattern, such as a sinusoid, a triangular wave, a saw-toothed wave or any other convenient waveform. Furthermore, a predetermined depth profile scratch test may also be carried out based on a cyclical depth pattern following e.g. a sinusoid, a triangular wave, a saw-toothed wave, or any other convenient waveform. Furthermore, penetration depth Pd of the tip 9a into the surface of the sample 5 can also be measured and recorded, if desired.

In step 104, the tip 9a of the stylus is re-scanned across at least the part of the predetermined track 6 affected by the scratch test carried out in steps 102 and 103, in order to determine and record a second surface profile,

In step 105, a residual depth profile is calculated based on the first and second surface profiles, typically by subtracting one from the other. This pre-scan / post-scan process is described in EP 1 092 142, herein incorporated by reference in its entirety.

In step 106, at least one critical point representing a fracture of the sample is determined based on the residual depth profile calculated in step 105. This determination can then be displayed automatically for the user, if desired.

This is carried out by determining when a function of the residual depth profile exceeds an expected magnitude value by a predetermined amount. This function may, for instance, be the first differential of the residual depth profile exceeding a threshold (which defines an expected magnitude) by a predetermined amount, indicating that a sudden change has occurred. This change could be separation of a coating from the underlying substrate, or cracking or spalling of the surface of the sample. Other functions are also possible, such as a higher-order differential (second or third order), or a departure from a linearly-approximated and projected trend, this approximated and projected trend representing a set of expected magnitude values.

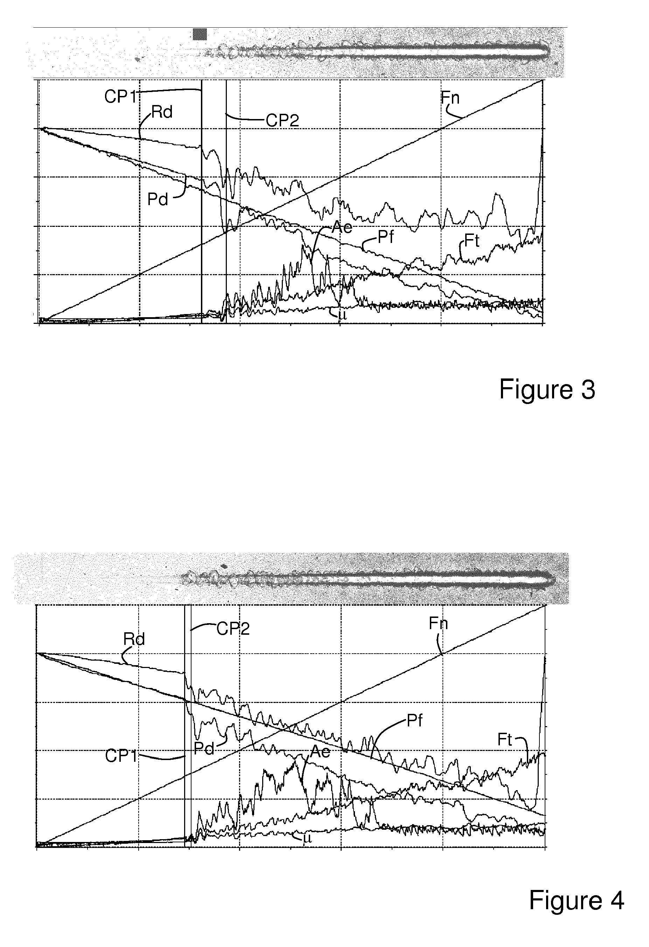

Figures 3 and 4 illustrate graphs of results obtained from linearly-ramped scratch tests carried out on a $50\mu m$ diamond-like-carbon (DLC) coating on a steel substrate, synchronised with optical microscope images of the scratch. In these tests, the normal force Fn was ramped linearly, and the pre-scan profile Pf (corresponding to the first surface profile mentioned above), penetration depth Pd (measured during the application of the normal force Fn and calculated in function of the pre-scan profile Pf), the residual depth Rd as calculated in step 105, the acoustic emissions Ae, the tangential force Ft as measured and also the coefficient of friction $\mu$ as calculated are plotted. It should be noted that the second surface profile is not plotted, since it is only used for calculating Rd and is itself not useful information to display to an operator. It should also be noted that Pf is sloped, since as mentioned above it is very difficult, or even impossible, to ensure that the surface of the sample is absolutely perpendicular to the Z-axis on a scale of nanometres. However, since the Pd and Rd measurements are also on the scale of nanometres, this slight slope should be taken into account for maximum precision.

From these graphs, it is clear that a conventional acoustic-emission-based or friction-based measurement based on Ae, Ft and/or $\mu$, does not precisely identify the first critical point CP1, identified by a vertical line. In fact, the first critical point identified by a significant change in Ae, Ft or $\mu$ (CP2) comes significantly after the first critical point CP1 which is measurable via the residual depth profile Rd. The surprising technical effect of the invention is thus a significantly more precise identification of at least the first critical failure point of the sample, which is not identified by prior art methods for all materials. Detection of further critical points can equally also be improved.

This improvement is particularly visible in the sample of figure 3, wherein CP1, which corresponds to delamination of the coating from its substrate without spalling, is extremely difficult to detect via changes in Ae, Ft or $\mu$, as evidenced by the fact that the Ft and $\mu$ curves do not exhibit any change at all at this point, and that the Ae curve only exhibits an insignificant change.

The residual depth profile Rd, and knowledge of the Young's and bulk moduli of the material, can then be used to determine the energy lost at each failure point identified above, or identified with any other convenient parameter.

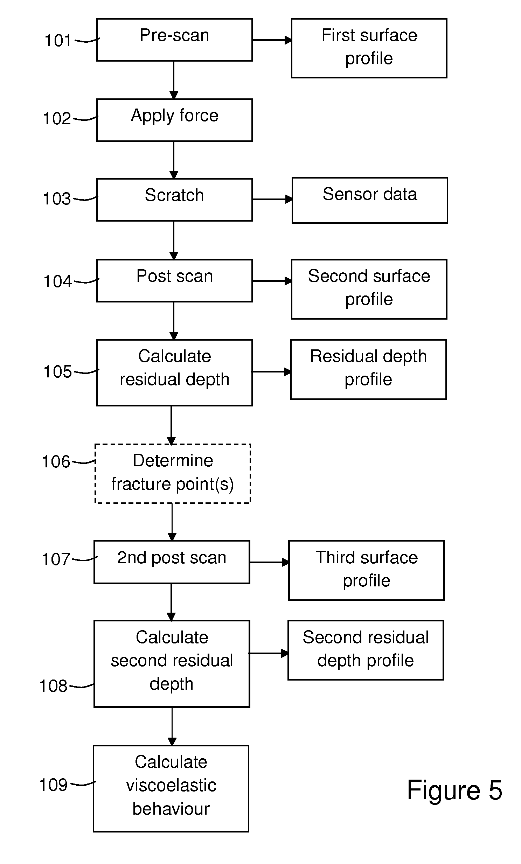

Figure 5 illustrates a method according to a further aspect of the invention. In this method, steps 101 to 105 are the same as in the method of figure 2, and step 106 is optional. Subsequent to step 105 or 106 (if executed), a second post-scan of the scratch is carried out after a predetermined period of time in step 107. This results in a third surface profile being obtained. In step 108, this third surface profile is subtracted from the first surface profile to obtain a second residual depth profile. On the basis of the first and second residual depth profiles, in step 109 the relaxation of the material of the sample is calculated, i.e. its viscoelastic properties and behaviour are obtained.

Steps 107 to 109 can be carried out repeatedly thereby generating further residual depth profiles in order to observe the relaxation of the material over a longer period. Further useful information regarding the relaxation of the sample over time can thereby be obtained.

The methods according to the invention permit also determining other properties. For instance, the adhesion of a coating to a substrate can be determined at points along the predetermined track 6 based on the first and/or second residual depth profile(s). This provides particularly useful data at points of delamination between the coating and the substrate, such as critical point CP1 mentioned above.

In the case of a multiphase material, the first and/or subsequent residual depth profile(s) can be analysed statistically in order to identify the individual phases of a multiphase material.

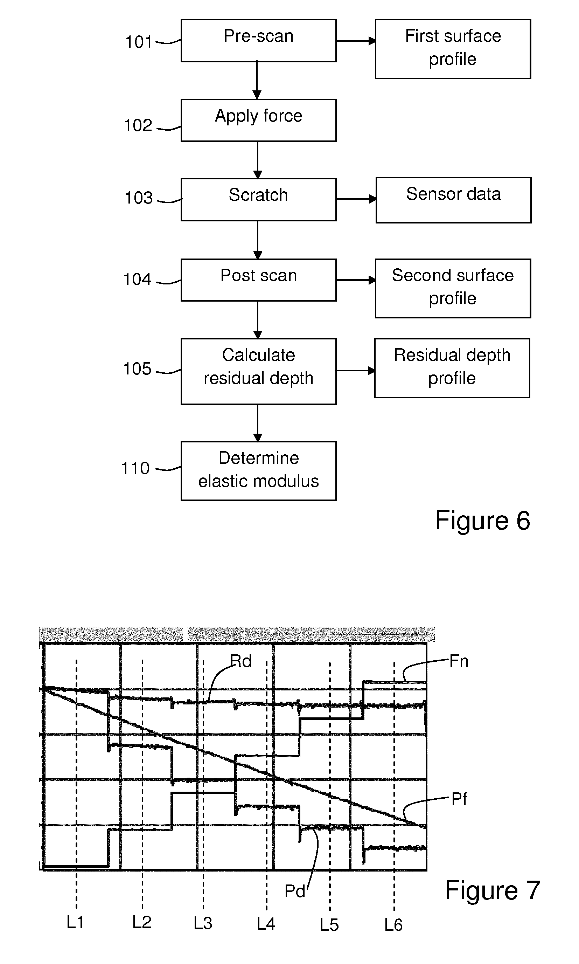

Furthermore, the elastic modulus of the sample can be determined based on comparison of the residual depth profile and penetration depth during the scratch test, since both the stress and the strain applied during the scratch test can be calculated from these profiles, with or without detection of critical failure points. This is illustrated in figures 6 and 7.

The method of figure 6 differs from that of figure 1 in that step 106 is replaced by a step 110 of calculating a value of elastic modulus of the material of the sample. A further step 106 of identifying failure points may nevertheless additionally be incorporated, either before or after step 110, if desired.

Figure 7 illustrates one way by which a value of elastic modulus can be determined. Other methods are of course possible within the scope of the invention, and the method described below is not to be construed as limiting since other methodologies are also possible.

This figure illustrates the sensor output from a scratch test carried out on a bulk PMMA sample, which has a known elastic modulus and Poisson's ratio. In this test, the normal force Fn was stepped up by discrete steps along the length of the scratch, and the indenter comprises a spherical tip.

Each step of the force curve can be considered as being similar to a quasi-static indentation test, the only difference being the movement of the sample. Hence, maximum penetration depth and residual depth can be used to calculate an elastic modulus based on standard indentation contact mechanics.

Contact stiffness, S is defined as follows when unloading the sample, where P is the load on the sample (corresponding to Fn in the graphs illustrated) and h is the displacement of the indenter (corresponding to Pd or Rd, as appropriate):

$$S = \frac{dP}{dh} = \frac{2}{\sqrt{\pi}} E_r \sqrt{A}$$

If we assume that $h_{max} = P_d$ (Maximum scratch penetration depth) and $h_{min} = R_d$ (Residual scratch penetration depth), then:

$$S = \frac{dP}{dh} = \frac{P_{max} - P_{min}}{P_d - R_d}$$

and the Reduced Modulus (as generally defined in the field of indentation measurements), $E_r$, can be calculated from:

$$E_r = \frac{\sqrt{\pi}}{2} \frac{S}{\sqrt{A}}$$

where A is the area of the indenter in contact with the sample at maximum load $P_{max}$. Therefore:

$$\frac{1}{E_r} = \frac{(1 - v_s^2)}{E_{IT}} + \frac{(1 - v_i^2)}{E_i}$$

where $E_{IT}$ and $v_{IT}$ are Young's modulus and Poisson's ratio for the sample and $E_i$ and $v_i$ are the same parameters for the indenter.

If we assume that the indenter is extremely rigid (usually diamond) when compared to the sample material, then $E_i$ and $v_i$ can be ignored and thus the indentation modulus, $E_{IT}$ can be calculated from:

$$E_{IT} = E_r \times \left(1 - v_s^{\ 2}\right)$$

Looking now at the results of figure 7, we can calculate $E_{IT}$ for load steps in which the penetration depth Pd ensures that the spherical part of the indenter is not exceeded, and hence the area A can be calculated based on the geometry of the indenter tip.

For example, for load increment L2, we have a measured $P_{max}$ of 0.00532 N, $P_{min}$ again of 0.0004, a Pd of 3.85 $\mu$m, Rd of 670 nm, and an area A calculated as 1.81427 x $10^{-12}$ $m^2$. Following the above equations, we have a contact stiffness of 1547 N/m, a reduced modulus $E_r$ of 1.017963 GPa and an $E_{IT}$ of 0.893263 GPa, assuming a Poisson's ration (v) of 0.35 for the PMMA substrate.

The $E_{IT}$ calculated for load increment L2 differs from the known elastic modulus of PMMA (typically 3-5 GPa), since a conventional indentation curve extrapolates only the linear portion of the unloading curve, whereas the present method assumes linearity of the curve over the entire depth change rebound from penetration depth Pd to residual depth Rd.

This method thus produces a lower modulus value for $E_{IT}$ than Young's modulus, which we can define as Scratch Modulus, $E_s$.

The scratch modulus $E_s$, even though it does not correspond directly to Young's modulus or bulk modulus, in any case provides a directly-calculable modulus derivable from a scratch test which permits direct comparison between different materials, and as such represents an extremely useful measurement not requiring a separate test to determine.

Computer-readable instructions for carrying out any of the above-mentioned methods can be provided as a computer program product, provided on a computer-readable storage medium or for download via the Internet or any other network. This computer program product comprises software code portions for causing a suitable scratch testing apparatus 1 to perform the steps the methods when the product is run on a computer 4 controlling the scratch test apparatus 1.

Although the invention has been described in terms of specific embodiments, these are not to be construed as limiting the scope of the invention, as variations thereto can be envisaged without departing from the invention as defined in the appended claims.

**Claims**

1. Method of evaluation a performance of a surface of a material, the method comprising steps of:

   - measuring a first surface profile (Pf) of a material sample (5) along a predetermined track (6) by bringing a tip (9a) of a stylus (9) into contact with a surface of the sample (5) and traversing said tip (9a) across the surface of the sample (5) in a direction tangential to the tip (9a) of the stylus (9) while recording said first surface profile (Pf), subsequently;
   - applying a normal force (Fn) to the surface of the sample (5) with the stylus (9), said normal force (Fn) being in a direction substantially perpendicular to the surface of the sample (5), subsequently;
   - moving said tip (9a) across the surface of the sample (5) following at least part of said predetermined track (6) while applying said normal force (Fn), subsequently;
   - measuring a second surface profile of said sample along at least part of said predetermined track (6) by bringing said tip (9a) into contact with the surface of the sample (5) and traversing said tip (9a) across the surface of the sample (5) along said track (6) while recording said second surface profile,
   - calculating a first residual depth profile (Rd) as a difference of said first surface profile (Pf) and said second surface profile,

   **characterised by**

   - determining a failure point (CP1; CP2) of the surface of the sample (5) by identifying when at least one value of a function of said first residual depth profile (Rd) deviates from an expected magnitude value by at least a predetermined amount.

2. Method according to claim 1, wherein said function of said residual depth profile (Rd) a first differential of said residual depth profile (Rd).

3. Method according to claim 1 or 2, wherein said normal force (Fn) varies as a cyclical function.

4. Method according to one of claims 1-3, further comprising subsequent steps of:

   - measuring a third surface profile of said sample along said predetermined track (6) by bringing said tip (9a) into contact with the surface of the sample (5) and traversing said tip (9a) across the surface of the sample (5) along said track (6) while recording said third surface profile, said third surface profile being measured at a predetermined time after said second profile, subsequently;
   - calculating a second residual depth profile as a difference of said first surface profile (Pf) and said third surface profile; subsequently
   - determining a viscoelastic behaviour of the surface of the sample (5) based on said first residual depth profile (Pd) and said second residual depth profile.

5. Method according to one of claims 1-4, comprising a step of determining energy lost at said failure point (CP1; CP2) based on said first surface profile (Pf) and said residual depth profile (Rd).

6. Method according to one of claims 1-5, comprising a step of measuring a penetration depth profile (Pd) of the tip (9a) into the sample (5) during application of said normal force (Fn), and a step of determining a value of elastic modulus based on said penetration depth profile (Pd) and said residual depth profile (Rd).

7. Method according to one of claims 1-6, wherein said normal force (Fn) is predetermined, or is dependent upon a predetermined depth profile.

8. Method according to one of claims 1-7, wherein said sample (5) comprises a substrate and a coating (5a) provided thereupon, said method further comprising a step of determining adhesion of said coating (5a) to said substrate based on said first residual depth profile (Rd).

9. Method of evaluation a performance of a surface of a material, the method comprising steps of:

   - measuring a first surface profile (Pf) of a material sample (5) along a predetermined track (6) by bringing a tip (9a) of a stylus (9) into contact with a surface of the sample (5) and traversing said tip (9a) across the surface of the sample (5) in a direction tangential to the tip (9) of the stylus (9), subsequently;
   - applying a normal force (Fn) to the surface of the sample (5) with the stylus (9), said normal force (Fn) being in a direction substantially perpendicular to the surface of the sample (5), subsequently;
   - moving the tip (9a) across the surface of the sample (5) following at least part of said predetermined track (6) while applying said normal force (Fn); subsequently;
   - measuring a second surface profile of said sample (5) along at least part of said predetermined track (6) by bringing said tip (9a) into contact with the surface of the sample (5) and traversing said tip (9a) across the surface of the sample (5) along said track (6) while recording said second surface profile,
   - calculating a first residual depth profile (Rd) as a difference of said first surface profile (Pf) and said second surface profile,

**characterised by**

- after a predetermined period of time, measuring a third surface profile of said sample (5) along at least part of said predetermined track (6) by bringing said tip (9a) into contact with the surface of the sample (5) and traversing said tip (9a) across the surface of the sample (5) along said track (6) while recording said third surface profile,
- calculating a second residual depth profile as a difference of said first surface profile (Pf) and said third surface profile, and
- determining at least one parameter of a viscoelastic behaviour of the material of said sample based on a function of said first residual depth profile and said second residual depth profile.

10. Method according to claim 9, wherein said normal force (Fn) varies as a cyclical function.

11. Method according to claim 9, wherein said normal force (Fn) is predetermined, or is dependent upon a predetermined depth profile.

12. Method of evaluation a performance of a surface of a material, the method comprising steps of:

   - measuring a first surface profile (Pf) of a material sample (5) along a predetermined track (6) by bringing a tip (9a) of a stylus (9) into contact with a surface of the sample (5) and traversing said tip (9a) across the surface of the sample (5) in a direction tangential to the tip (9a) of the stylus (9), subsequently;
   - applying a normal force (Fn) to the surface of the sample (5) with the stylus (9), said normal force (Fn) being in a direction substantially perpendicular to the surface of the sample (5), subsequently;
   - moving the tip (9a) across the surface of the sample (5) following at least part of said predetermined track (6) while applying said normal force (Fn) and measuring a penetration depth profile (Pd) of the tip (9a) of the stylus (9) into the surface of the sample (5), said penetration depth profile (Pd) taking into account said first surface profile (Pf), subsequently;
   - measuring a second surface profile of said sample (5) along at least part of said predetermined track (6) by bringing said tip (9a) into contact with the surface of the sample (5) and traversing said tip (9a) across the surface of the sample (5) along said track (6) while recording said second surface profile,
   - calculating a first residual depth profile (Pd) as a difference of said first surface profile (Pd) and said second surface profile,

**characterised by**
determining a value of elastic modulus based on a difference between said penetration depth (Pd) and said first residual depth profile (Rd).

13. Method according to claim 12, wherein said normal force (Fn) varies as a cyclical function.

14. Method according to claim 12, wherein said normal force (Fn) is predetermined, or is dependent upon a predetermined depth profile.

15. Method according to claim 12, wherein said normal force (Fn) varies as a step function.

16. Scratch test apparatus (1) adapted to carry out the method of any of claims 1-15.

17. Computer program product directly loadable into the internal memory of a digital computer comprising software code portions for causing a scratch testing apparatus (1) to perform the steps of any of claims claim 1-15 when said product is run on a computer controlling said scratch test apparatus (1).

Figure 1

101 — Pre-scan → First surface profile

102 — Apply force

103 — Scratch → Sensor data

104 — Post scan → Second surface profile

105 — Calculate residual depth → Residual depth profile

106 — Determine fracture point(s)

Figure 2

Figure 3

Figure 4

Figure 5

101 — Pre-scan ──────→ First surface profile

102 — Apply force

103 — Scratch ──────→ Sensor data

104 — Post scan ──────→ Second surface profile

105 — Calculate residual depth ──────→ Residual depth profile

110 — Determine elastic modulus

Figure 6

Rd

Fn

Pf

Pd

L1    L2    L3    L4    L5    L6

Figure 7

Europäisches
Patentamt

European
Patent Office

Office européen
des brevets

# EUROPEAN SEARCH REPORT

**Application Number**

EP 16 17 8524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 092 142 A1 (DU PONT [US]) 18 April 2001 (2001-04-18) * pages 9-32; figures 1-11 * | 1-17 | INV. G01N3/46 |
| X | US 2004/011119 A1 (JARDRET VINCENT P [US] ET AL) 22 January 2004 (2004-01-22) * paragraphs [0054] - [0071]; figures 1-15 * | 1,9,12, 16,17 | |
| A | US 2003/183021 A1 (HOLMBERG KENNETH [FI]) 2 October 2003 (2003-10-02) * paragraphs [0017] - [0018] * | 1,9,12, 16,17 | |
| A | US 2014/373608 A1 (BELLEMARE SIMON CLAUDE [US] ET AL) 25 December 2014 (2014-12-25) * paragraph [0065] * | 1,9,12, 16,17 | |
| A | US 2009/320575 A1 (HANGEN UDE DIRK [DE]) 31 December 2009 (2009-12-31) * the whole document * | 1-17 | |
| A | WU T-W ET AL: "Micro-indentation and scanning probe microscopy to assess multilayer magnetic film damage", JOURNAL OF MAGNETISM AND MAGNETIC MATERIALS, ELSEVIER, AMSTERDAM, NL, vol. 219, no. 1, 2 August 2000 (2000-08-02), pages 142-152, XP004215614, ISSN: 0304-8853, DOI: 10.1016/S0304-8853(00)00348-6 * the whole document * | 1-17 | TECHNICAL FIELDS SEARCHED (IPC) G01N |

-/--

The present search report has been drawn up for all claims

| Place of search | Date of completion of the search | Examiner |
|---|---|---|
| The Hague | 11 January 2017 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 17 8524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PIANTINO J P: "LA DURETE ACCEDE AU TEMPS REEL", MESURES REGULATION AUTOMATISME, CFE. PARIS, FR, vol. 57, no. 646, 1 June 1992 (1992-06-01) , pages 66-67, XP000305848, ISSN: 0755-219X * the whole document * ----- | 1-17 | |
| A | US 2011/239748 A1 (WEON JONG IL [KR] ET AL) 6 October 2011 (2011-10-06) * the whole document * ----- | 1-17 | |

TECHNICAL FIELDS
SEARCHED      (IPC)

The present search report has been drawn up for all claims

| Place of search | Date of completion of the search | Examiner |
|---|---|---|
| The Hague | 11 January 2017 | Cantalapiedra, Igor |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**ANNEX TO THE EUROPEAN SEARCH REPORT
ON EUROPEAN PATENT APPLICATION NO.**

EP 16 17 8524

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2017

| Patent document cited in search report | | | Publication date | Patent family member(s) | | | Publication date |
|---|---|---|---|---|---|---|---|
| EP 1092142 | A1 | | 18-04-2001 | AU | 750769 | B2 | 25-07-2002 |
| | | | | AU | 3075799 | A | 27-09-1999 |
| | | | | BR | 9907979 | A | 17-10-2000 |
| | | | | CA | 2321797 | A1 | 16-09-1999 |
| | | | | CN | 1292870 | A | 25-04-2001 |
| | | | | DE | 69917780 | D1 | 08-07-2004 |
| | | | | DE | 69917780 | T2 | 16-06-2005 |
| | | | | EP | 1092142 | A1 | 18-04-2001 |
| | | | | JP | 4233756 | B2 | 04-03-2009 |
| | | | | JP | 2002506221 | A | 26-02-2002 |
| | | | | US | 6520004 | B1 | 18-02-2003 |
| | | | | WO | 9946576 | A1 | 16-09-1999 |
| US 2004011119 | A1 | | 22-01-2004 | AU | 2003220672 | A1 | 27-10-2003 |
| | | | | EP | 1493011 | A1 | 05-01-2005 |
| | | | | JP | 2005522690 | A | 28-07-2005 |
| | | | | US | 2004011119 | A1 | 22-01-2004 |
| | | | | WO | 03087778 | A1 | 23-10-2003 |
| US 2003183021 | A1 | | 02-10-2003 | AU | 8407001 | A | 13-03-2002 |
| | | | | EP | 1314017 | A1 | 28-05-2003 |
| | | | | US | 2003183021 | A1 | 02-10-2003 |
| | | | | WO | 0218905 | A1 | 07-03-2002 |
| US 2014373608 | A1 | | 25-12-2014 | CA | 2915986 | A1 | 24-12-2014 |
| | | | | EP | 3011308 | A1 | 27-04-2016 |
| | | | | US | 2014373608 | A1 | 25-12-2014 |
| | | | | WO | 2014205402 | A1 | 24-12-2014 |
| US 2009320575 | A1 | | 31-12-2009 | EP | 2291635 | A1 | 09-03-2011 |
| | | | | US | 2009320575 | A1 | 31-12-2009 |
| | | | | WO | 2009143528 | A1 | 26-11-2009 |
| US 2011239748 | A1 | | 06-10-2011 | JP | 2011220995 | A | 04-11-2011 |
| | | | | US | 2011239748 | A1 | 06-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2291635 A
- EP 1092142 A